# EUROPÄISCHE PATENTANMELDUNG

(11) **EP 1 094 234 A2**
(43) Veröffentlichungstag der Anmeldung: **25.04.2001**
(21) Anmeldenummer: 00117980.3
(22) Anmeldetag: 22.08.2000
(51) Int. Cl.: F16D 25/12, B60K 17/00

(54) **Ausrückvorrichtung**

(30) Priorität: 22.10.1999 DE 19951202; 29.06.2000 DE 10031711
(71) Anmelder: Mannesmann Sachs Aktiengesellschaft, 97424 Schweinfurt (DE)
(72) Erfinder: Ottenbruch, Peter, Dr.-Ing., 97453 Schonungen (DE); Grosspietsch, Wolfgang, Dipl.-Ing.(FH), 97422 Schweinfurt (DE); Ebert, Angelika, 97421 Schweinfurt (DE); Zink, Georg, Dipl.-Ing.(FH), 97447 Gerolzhofen (DE); Husse, Ulrich, Dipl.-Ing.(FH), 97422 Schweinfurt (DE); Heiartz, Markus, Dipl.-Ing.(FH), 97422 Schweinfurt (DE)

(57) **Zusammenfassung**

Eine Ausrückvorrichtung (4) für eine hydraulisch betätigte Kupplung (3) eines Kraftfahrzeuges hat einen mit einer hydraulischen Anlage (2) verbundenen Energiespeicher (16). Der Energiespeicher (16) nimmt nach verschleißbedingtem Druckanstieg im System beim Ausrücken der Kupplung zunehmend Energie auf und setzt diese bei nachfolgenden Ausrückvorgängen wieder ein. Die Verbindung des Energiespeichers (16) mit der hydraulischen Anlage (2) ermöglicht die Erhöhung des Energieniveaus des Energiespeichers (16), so dass eine Druckerhöhung in der hydraulischen Anlage (2) beim steigenden Verschleiß der Kupplung (3) nicht zu einer Erhöhung einer Pedalkraft führt.

## Beschreibung

Die Erfindung betrifft eine Ausrückvorrichtung, insbesondere für eine Kupplung eines Kraftfahrzeuges, mit einem von einem Pedal betätigbaren Geberzylinder einer hydraulischen Anlage mit einem beim Einrücken Energie aufnehmenden und beim Ausrücken die Energie wieder freisetzenden Energiespeicher, wobei der Energiespeicher an dem Pedal oder einer mit dem Pedal verbundenen Hebeleinrichtung angelenkt ist.

Solche Ausrückvorrichtungen werden bei heutigen hydraulisch betätigten Kupplungen häufig eingesetzt und sind aus der Praxis bekannt. Der Energiespeicher hat eine Feder, die das in Grundstellung befindliche Pedal in seiner Lage hält. Beim Niederdrücken des Pedals wird die Feder geringfügig gespannt. Dabei verschwenkt die Feder, bis ihr Kraftangriffspunkt an dem Pedal die Bewegung des Pedals unterstützt. Dies ermöglicht einen reduzierten Kraftaufwand beim Niederdrücken des Pedals.

Durch die Anlenkung des Energiespeichers an dem Pedal, oder einer mit dem Pedal verbundenen Hebeleinrichtung, lassen sich besonders kostengünstig gestaltete Geberzylinder in der hydraulischen Anlage einsetzen.

Nachteilig bei der herkömmlichen Kupplungen ohne Verschleißkompensation ist, dass mit zunehmendem Kupplungsverschleiß steigende Kräfte zum Betätigen der Kupplung und damit höhere Drücke innerhalb der hydraulischen Anlage erforderlich sind. Dies führt bei zunehmendem Kupplungsverschleiß zu ansteigenden Kräften beim Niederdrücken des Pedals.

Der Erfindung liegt das Problem zugrunde, eine Ausrückvorrichtung der eingangs genannten Art so zu gestalten, dass sich das Pedal weitgehend unabhängig von einer Veränderung der Drücke in der hydraulischen Anlage niederdrücken lässt.

Dieses Problem wird erfindungsgemäß dadurch gelöst, dass der Energiespeicher Mittel zur Erhöhung seiner Energieaufnahme bei steigendem Druck innerhalb der hydraulischen Anlage aufweist.

Durch diese Gestaltung sind die von dem Energiespeicher auf das Pedal übertragenen Kräfte abhängig von Drücken innerhalb der hydraulischen Anlage. Bei zunehmendem Kupplungsverschleiß lässt sich daher das Pedal mit zunehmender unterstützender Kraft des Energiespeichers niederdrücken. Im günstigsten Fall gleichen sich die Kräfte des Energiespeichers und der durch den Kupplungsverschleiß erforderlichen steigende Kräfte aus. Das Pedal lässt sich damit unabhängig von einer Veränderung der Drücke in der hydraulischen Anlage niederdrücken. Hierdurch ermöglicht die erfindungsgemäße Ausrückvorrichtung die zum Betätigen der Kupplung erforderliche Pedalkraft auf dem Niveau des Neuzustandes der Kupplung zu halten. Die erfindungsgemäße Ausrückvorrichtung kann wie die bekannte Ausrückvorrichtung eine Feder als Energiespeicher und/oder beispielsweise ein Luftkissen aufweisen.

Die erfindungsgemäße Ausrückvorrichtung erfordert einen besonders geringen baulichen Aufwand, wenn die Mittel zur Erhöhung der Energieaufnahme des Energiespeichers eine hydraulische Nachstelleinrichtung aufweisen und wenn die hydraulische Anlage zur Druckbeaufschlagung der hydraulischen Nachstelleinrichtung gestaltet ist. Hierdurch wird nach verschleißbedingtem Druckanstieg im System beim Niederdrücken des Pedals Energie dem Energiespeicher zugeführt. Beim nächstmaligen Niederdrücken des Pedals steht die um diesen Energiebetrag erhöhte Gesamtenergie des Speichers zur Unterstützung der Pedalbewegung zur Verfügung.

Die erfindungsgemäße Ausrückvorrichtung gestaltet sich konstruktiv besonders einfach, wenn eine Feder des Energiespeichers von der hydraulischen Nachstelleinrichtung vorspannbar gestaltet ist.

Die hydraulische Einrichtung gestaltet sich gemäß einer vorteilhaften Weiterbildung der Erfindung besonders kostengünstig, wenn die hydraulische Nachstelleinrichtung ein von dem Druck in der hydraulischen Anlage bewegliches Element und Mittel zur Halterung des beweglichen Elements in der von dem Nachstelldruck der hydraulischen Anlage eingestellten Lage hat. Eine ständige Justierung der hydraulischen Nachstelleinrichtung ist in der Regel nur in einer Richtung erforderlich, da die Drücke in der hydraulischen Anlage beim Kupplungsverschleiß stetig ansteigen.

Nach einem Auswechseln der Kupplungsbeläge oder nach einem Störfall lässt sich die erfindungsgemäße Ausrückvorrichtung einfach wieder in die Ausgangsstellung zurückversetzen, wenn die hydraulische Nachstelleinrichtung ein manuell betätigbares Löseorgan zur Zurückbewegung des beweglichen Elements in die Grundstellung hat.

Die Mittel zur Halterung des beweglichen Elements gestalten sich besonders kostengünstig, wenn sie ein zwischen der hydraulischen Anlage und der hydraulischen Nachstelleinrichtung angeordnetes Rückschlagventil aufweisen.

Eine ständige statische Druckbeaufschlagung der hydraulischen Nachstelleinrichtung lässt sich gemäß einer anderen vorteilhaften Weiterbildung der Erfindung einfach vermeiden, wenn die Mittel zur Halterung des beweglichen Elements ein kraft- oder formschlüssig mit dem beweglichen Element verbindbares Halteelement aufweisen. Durch diese Gestaltung werden Störfälle der hydraulischen Nachstelleinrichtung durch eine Leckage zuverlässig vermieden. Einflüsse einer langen ungenutzten Standzeit der hydraulischen Anlage wirken sich hierdurch nicht auf die zum Niederdrücken des Pedals erforderlichen Kraft aus. Das Halteelement kann wahlweise das bewegliche Element stufenlos oder stufig halten. Weiterhin lassen sich die Bauteile der hydraulischen Nachstelleinrichtung besonders kostengünstig, beispielsweise aus Kunststoff fertigen.

Die zur Bewegung des Pedals erforderliche Kraft lässt sich gemäß einer anderen vorteilhaften Weiterbildung der Erfindung einfach einstellen, wenn das Pedal eine Rampe hat und wenn ein Gleit- oder Rollelement des Energiespeichers gegen die Rampe vorgespannt ist. Die Rampe lässt sich gegenüber der Bewegungsrichtung des Gleit- oder Rollelements schräg anordnen oder mit einer Krümmung versehen.

In Ruhestellung wirken gemäß einer anderen vorteilhaften Weiterbildung der Erfindung keine Kräfte in Betätigungsrichtung auf das Pedal, wenn die Rampe in Ruhestellung des Pedals einen senkrecht zur Bewegungsrichtung des Gleit- oder Rollelementes angeordneten Absatz aufweist.

Eine Richtung der von dem Energiespeicher auf das Pedal ausgeübten Kraft lässt sich gemäß einer anderen vorteilhaften Weiterbildung der Erfindung einfach festlegen, wenn der Energiespeicher zwei teleskopartig ineinanderschiebbare und mittels der Feder voneinander weg vorgespannte Hülsen hat und wenn eine der Hülsen an dem Pedal angelenkt ist.

Die zweite Hülse könnte beispielsweise an der hydraulischen Nachstelleinrichtung angelenkt sein. Die erfindungsgemäße Ausrückvorrichtung gestaltet sich jedoch besonders kompakt, wenn die zweite Hülse an einem feststehenden Bauteil angelenkt ist.

Der Energiespeicher könnte beispielsweise über Gelenke an den angrenzenden Bauteilen befestigt sein. Da der Energiespeicher jedoch ausschließlich Druckkräfte übertragen muss, lässt sich dessen Befestigung gemäß einer anderen vorteilhaften Weiterbildung der Erfindung besonders, kostengünstig gestalten, wenn der Energiespeicher jeweils Kugelköpfe oder Kugelpfannen zum Abstützen an angrenzenden Bauteilen hat.

Die hydraulische Nachstelleinrichtung kann sich gemäß einer anderen vorteilhaften Weiterbildung der Erfindung beim Niederdrücken des Pedals verschwenken, wenn zwischen der hydraulischen Nachstelleinrichtung und der hydraulischen Anlage eine elastische Leitung angeordnet ist.

Die sich verschwenkende hydraulische Nachstelleinrichtung kann über eine starre und besonders stabile Leitung mit der hydraulischen Anlage verbunden sein, wenn ein Anschlussstutzen der hydraulischen Nachstelleinrichtung senkrecht zu der Schwenkrichtung des Energiespeichers und in der Schwenkachse der Kugelpfanne angeordnet ist und wenn ein Anschlussstecker der die hydraulische Nachstelleinrichtung mit der hydraulischen Anlage verbindende Leitung gegenüber dem Anschlussstutzen verdrehbar ist.

Zur weiteren Vereinfachung des konstruktiven Aufbaus der erfindungsgemäßen Ausrückvorrichtung trägt es bei, wenn die Feder gegenüber der hydraulischen Nachstelleinrichtung schwenkbar gehalten ist.

Starke Druckschwankungen in der hydraulischen Anlage werden gemäß einer anderen vorteilhaften Weiterbildung der Erfindung nicht auf die hydraulische Nachstelleinrichtung übertragen, wenn die hydraulische Nachstelleinrichtung eine Drossel hat. Solche Druckschwankungen entstehen beispielsweise durch schnelle Pedalbewegungen.

Eine fehlerhafte Nachstellung der hydraulischen Nachstelleinrichtung lässt sich gemäß einer anderen vorteilhaften Weiterbildung der Erfindung zuverlässig vermeiden, wenn die Drossel zum Verschließen einer Leitung zwischen, der hydraulischen Anlage und der hydraulischen Nachstelleinrichtung bei Druckschwankungen in der zu der hydraulischen Anlage führenden Leitung und/oder bei niedriger Temperatur gestaltet ist. Da die hydraulische Nachstelleinrichtung die Feder des Energiespeichers nur sehr selten und nur um geringe Beträge vorspannen muss, kann die Drossel die Leitung bereits bei geringen Druckschwankungen verschließen.

Die Drossel vermag Druckschwankungen gemäß einer anderen vorteilhaften Weiterbildung der Erfindung besonders zuverlässig zu erfassen, wenn die Drossel einen von der Strömung bewegbaren Kolben hat und wenn der Kolben zur Bewegung eines die Leitung versperrenden Schließgliedes gestaltet ist.

Die Drossel und das Rückschlagventil lassen sich gemäß einer anderen vorteilhaften Weiterbildung als gemeinsames, kostengünstig zu montierendes Bauteil gestalten, wenn der Kolben in Grundstellung des Pedals in einer Lage gehalten ist, in welcher ein zweites Schließglied in eine die Leitung versperrende Stellung vorspannt ist.

Der Kolben wird gemäß einer anderen vorteilhaften Weiterbildung der Erfindung zuverlässig in seiner Grundstellung gehalten, wenn er mittels einer Feder in die Grundstellung vorgespannt ist.

Die Drossel benötigt gemäß einer anderen vorteilhaften Weiterbildung der Erfindung besonders wenige zu montierende Bauteile, wenn sie senkrecht angeordnet und von unten nach oben durchströmbar gestaltet ist. Hierdurch hält die Schwerkraft den Kolben in der Grundstellung.

Da erfahrungsgemäß Schmutz oder Fettpartikel die Leitung vom Geberzylinder zu einem Nachstellkolben bzw. zu dem Rückschlagventil zusetzen kann, wird vorgeschlagen, die Leitung als Ringkreisquerschnitt auszubilden, die durch ihren geringen Strömungsspalt verhindert, dass in die Leitung Fremdkörper eindringen können. Ferner verhindert der Ringspalt, dass Luftblasen in den aufwendig zu entlüftenden Zylinderraum des Nachstellkolbens eindringen können, wodurch sich ein weiterer Vorteil für die Funktion, insbesondere bei Reparaturarbeiten, ergibt. Zur Verwirklichung dieses kreisförmigen Kanalquerschnittes wird vorgeschlagen, eine Schraube mit einem Bolzen in den Kanal einzudrehen, der über die gesamte, zum Geberzylinder hin gerichtete Leitungslänge reicht, und so den ringförmigen Kanalquerschnitt bildet.

Bei unsachgemäßer Betätigung des Kupplungspedals können ungewollte Druckspitzen entstehen und eine Übermenge an Fluid in den Nachstellzylinderraum strömen lassen, was Wegverluste beim Wiedereinkuppeln und somit mögliches Pedalhängenbleiben zur Folge haben könnte. Eine Abhilfe wird dadurch vorgeschlagen, dass das pro Lastspiel zu verschiebende Volumen beschränkt wird. Diese Beschränkung wird in Verbindung mit einem Rückschlagventil dadurch erreicht, dass dieses aus einer Kugel bestehende Rückschlagventil in sofern doppelt wirkt, dass in beiden Bewegungsrichtungen der Kugel jeweils ein Sitz angeordnet ist, der durch die Kugel verschlossen werden kann. Es wird vorgeschlagen, die Kugel in einem Querschnitt anzuordnen, der größer ist als der Querschnitt der Leitung, wodurch die Kugel bei ihrer Bewegung von einem Sitz zum anderen eine limitierte Menge Fluid durchlässt, die den Bewegungsweg mal der Fläche der Kugel entspricht. Beim Einkuppelvorgang, also bei Loslassen des Pedals, sinkt die Kugel wieder auf ihren ersten Anschlag zurück und nimmt somit ihre Ausgangslage wieder ein.

Es wird schließlich eine Lösung vorgeschlagen, die den Nachstellzylinder und dessen Kolben über den Kanal mit dem Geberzylinder ohne die Verwendung eines Rückschlagventiles ankoppelt, wodurch der Druck im Nachstellzylinder auf dem gleichen Niveau wie der im Geber-zylinder steht. Der Nachstellkolben wird über ein Gewinde mit dem Gehäuse verschraubt, wodurch der Nachstellkolben nur durch seine drehende Bewegung nachgestellt werden kann. Der Energiespeicher wirkt auf den derart in das Ge-häuse eingeschraubten Kolben und verändert ihre Kraft-aufnahme und Kraftabgabe solange nicht, solange es keinen Verschleiß an der Kupplung gibt. Tritt jedoch Verschleiß ein, so erhöhen sich die Kräfte zum Ausrücken der Kupplung und somit auch die Systemkräfte. Wenn also der Druck des Fluids auf den Nachstellkolben den Druck des Kraftspeichers auf den Nachstellkolben erreicht oder übersteigen will, so wird der Nachstellkolben kraftlos und das Gewinde wird entlastet. In dieser Situation dreht eine Drehfeder das Gewinde des Kolbens aus dem Gehäuse heraus. Dadurch wird der Energiespeicher wie-der stärker vorgespannt, bis das System wieder im Gleichgewicht ist. Das Gewinde ist derart aufgebaut, dass es auf Kräfte in die Achsrichtung des Nachstellkolbens unter Selbsthemmung steht, wodurch sich bei der Betätigung des Kupplungspedals keine Veränderungen der Position des Nachstellkolbens ergeben können. Die Drehfeder wird mit einer bestimmten Vorspannung montiert, die groß genug ist, den Nachstellkolben ausreichend weit für den Gesamtweg beim Kupplungsverschleiß herauszudrehen. Die Verdrehkraft der Drehfeder wirkt dauernd und ist erst wirksam, wenn die Systemdrücke im Geberzylinder durch den Kupplungsverschleiß ein bestimmtes Niveau überschreiten.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: eine schematische Darstellung einer erfindungsgemäßen Ausrückvorrichtung mit einer hydraulischen Anlage für eine Kupplung,
- Fig.2: einen Längsschnitt durch eine erste Ausführungsform eines Energiespeichers der Ausrückvorrichtung aus Figur 1,
- Fig.3: einen Längsschnitt durch eine zweite Ausführungsform eines Energiespeichers der Ausrückvorrichtung aus Figur 1,
- Fig.4: eine weitere Ausführungsform der erfindungsgemäßen Ausrückvorrichtung in teilweise geschnittener Darstellung,
- Fig.5: eine weitere Ausführungsform der erfindungsgemäßen Ausrückvorrichtung mit einem Pedal in einer Seitenansicht,
- Fig.6: die Ausrückvorrichtung aus Figur 5 in einer Ansicht von vorne,
- Fig.7: eine Schnittdarstellung durch eine Einheit aus Drossel und Rückschlagventil,
- Fig.8: eine Schnittdarstellung durch eine hydraulische Nachstelleinrichtung,
- Fig.9: eine Schnittdarstellung durch eine weitere Ausführungsform der hydraulischen Nachstelleinrichtung,
- Fig.10: eine Längsschnittdarstellung eines Geberzylinders,
- Fig.11: einen Geberzylinder mit einem Nachstellkolben, der in einem Gehäuse über ein Gewinde drehbar angeordnet ist und durch eine Drehfeder gegenüber dem Gehäuse drehend vorgespannt ist,
- Fig. 12: die Drehfeder zur Verdrehung des Nachstellkolbens im Gehäuse,
- Fig. 13: das Gehäuse mit einer Leitung, in die ein doppelt wirkendes Rückschlagventil mit einer Kugel zwischengeschaltet ist,
- Fig. 14: das Gehäuse mit einer Leitung, die einen ringförmigen Querschnitt aufweist.

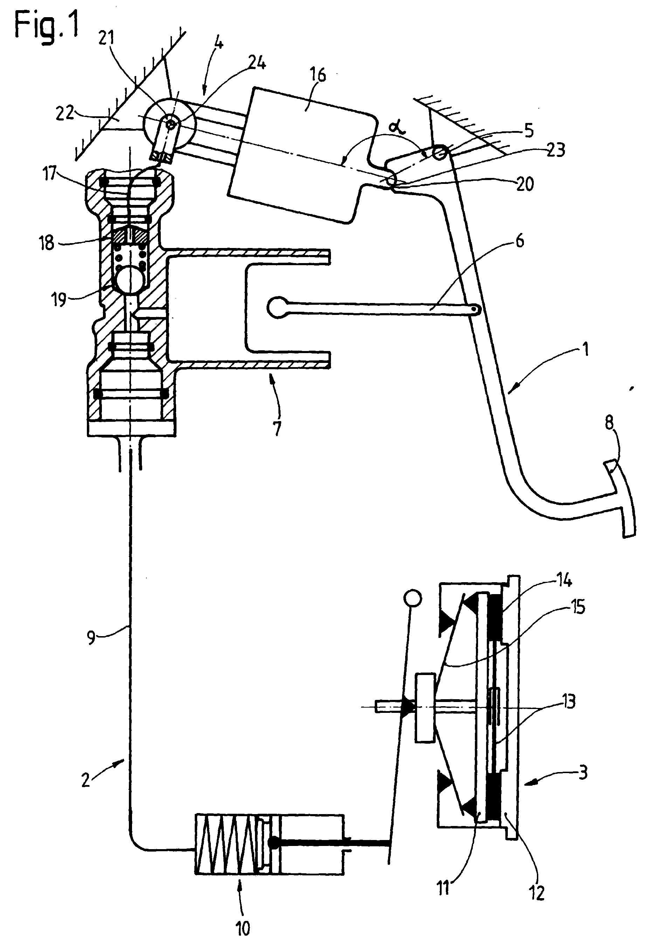

Figur 1 zeigt eine von einem Pedal 1 über eine hydraulische Anlage 2 betätigbare Kupplung 3 eines Kraftfahrzeuges. Die hydraulische Anlage 2 und das Pedal 1 sind jeweils mit einer Ausrückvorrichtung 4 verbunden. Das Pedal 1 ist an einem Lager 5 schwenkbar gelagert und über eine Gelenkstange 6 mit einem Geberzylinder 7 der hydraulischen Anlage 2 verbunden. Das Pedal 1 ist in einer Ruhestellung dargestellt. Mittels einer Kraft auf eine Pedalplatte 8 lässt sich das Pedal 1 niederdrücken und um das Lager 5 verschwenken. Von dem Geberzylinder 7 führt eine Leitung 9 zu einem Nehmerzylinder 10 der Kupplung 3. Die Kupplung 3 hat zwei Druckplatten 11,12, zwischen denen eine Kupplungsscheibe 13 mit Reibbelägen 14 eingespannt ist. Dies kennzeichnet die eingerückte Stellung der Kupplung 3. Bei einem Niederdrücken des Pedals 1 wird Hydraulikfluid in dem Geberzylinder 7 verdrängt und dem Nehmerzylinder 10 zugeführt. Der Nehmerzylinder 10 bewegt eine an einer der Druckplatten 11 anliegende Membranfeder 15. Anschließend können sich die Druckplatten 11,12 auseinander und von den Reibbelägen 14 wegbewegen.

Die Ausrückvorrichtung 4 hat einen Energiespeicher 16 zur Aufnahme von Energie beim Auslenken des Pedals 1. Der Energiespeicher 16 ist über eine Leitung 17 mit dem Ausgang des Geberzylinders 7 verbunden. Innerhalb der Leitung 17 sind eine Drossel 18 und ein Rückschlagventil 19, welches ein Rückfließen von Hydraulikfluid aus dem Energiespeicher 16 in die hydraulische Anlage 2 verhindert, angeordnet. Der Energiespeicher 16 hat sich an seinen Enden in Kugelpfannen 20,21 des Pedals 1 und eines feststehenden Bocks 22 abstützende Kugelköpfe 23,24. In der eingezeichneten Grundstellung ist ein Winkel á zwischen der Senkrechten der Kugelpfanne 20 des Pedals 1 und der durch die Kugelköpfe 23,24 verlaufenden Längsachse des Energiespeichers 16 kleiner als 180°. Hierdurch wird das Pedal 1 von dem Energiespeicher 16 in der eingezeichneten Lage gehalten. Beim Niederdrücken des Pedals 1 und damit beim Ausrücken der Kupplung 3 steigt der Winkel á an. Oberhalb von 180° wird die Bewegung des Pedals 1 von dem Energiespeicher 16 unterstützt. Der Energiespeicher 16 setzt damit beim Ausrücken der Kupplung 3 Energie frei.

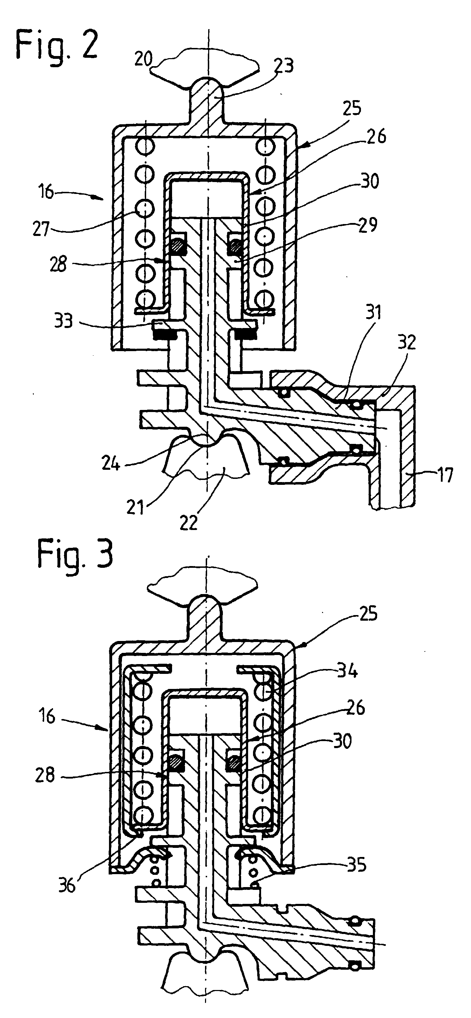

Figur 2 zeigt den Energiespeicher 16 in einem Längsschnitt. Der Energiespeicher 16 hat zwei teleskopartig ineinanderschiebbare Hülsen 25, 26. Die Hülsen 25, 26 werden von einer als Wendelfeder ausgebildeten Feder 27 voneinander weg vorgespannt. Die mit der hydraulischen Anlage 2 aus Figur 1 verbundene Leitung 17 führt zu einer hydraulischen Nachstelleinrichtung 28 mit einem feststehenden und gegenüber der inneren Hülse 26 abgedichteten Kolben 29. Die innere Hülse 26 hat damit ein durch den Druck in der Leitung 17 bewegliches Element 30 der Nachstelleinrichtung 28. Bei steigendem Druck in der hydraulischen Anlage 2 und damit in der hydraulischen Nachstelleinrichtung 28 spannt das bewegliche Element 30 die Feder 27 vor. Die Bewegung des in Figur 1 dargestellten Pedals 1 wird umso stärker unterstützt, je größer der Druck in der hydraulischen Anlage 2 ist. Selbstverständlich kann diese Kraft nicht größer werden als die zum Niederdrücken des Pedals 1 erforderliche Kraft. Im Neuzustand der in Figur 1 dargestellten Kupplung 3 wird zunächst der Energiespeicher 16 durch die Montage einer entsprechend gestalteten Feder 27 auf ein vorgesehenes Speichervermögen eingestellt. Hierdurch wird eine vorgesehene komfortable Betätigung der Kupplung 3 ermöglicht. Beim Verschleiß der Reibbeläge 14 der Kupplung 3 steigt die zum Ausrücken der Kupplung 3 erforderliche Kraft und damit der Druck in der hydraulischen Anlage 2 an. Da über den Druck in der hydraulischen Anlage 2 die Vorspannung der Feder 27 eingestellt wird, lässt sich ein steigender Kraftaufwand zur Betätigung der Kupplung 3 vermeiden. Die Feder 27 kann entsprechend dem vorgesehenen Kraftverlauf eine progressive oder lineare Federkennlinie aufweisen.

Weiterhin zeigt Figur 2, dass ein Anschlussstutzen 31 der hydraulischen Nachstelleinrichtung 28 in der Höhe des Kugelkopfes 24 senkrecht zur Schwenkrichtung des Energiespeichers 16 angeordnet ist. Die in Figur 1 dargestellte, die hydraulische Anlage 2 mit der hydraulischen Nachstelleinrichtung 28 verbindende Leitung 17 hat einen gegenüber dem Anschlussstutzen 31 verdrehbaren Anschlussstecker 32. Hierdurch kann die Leitung 17 starr gestaltet sein. Die Bewegung der äußeren Hülse 25 wird von einem Anschlag 33 begrenzt. Der Energiespeicher 16 kann anstelle der Feder 27 auch andere, nicht dargestellte Anordnungen wie beispielsweise ein Luftkissen aufweisen, mit denen sich Energie speichern und abgeben lässt. Weiterhin trägt Luft in der hydraulischen Nachstelleinrichtung 28 zu einer Erhöhung der Kapazität des Energiespeichers 16 bei.

Figur 3 zeigt eine weitere Ausführungsform des Energiespeichers 16 aus Figur 1. Diese Ausführungsform unterscheidet sich von der aus Figur 2 im wesentlichen dadurch, dass der Energiespeicher 16 zwei Federn 34, 35 mit derselben Wirkrichtung zur Vorspannung der äußeren Hülse 25 hat. Eine der Federn 34 stützt sich an dem von der hydraulischen Nachstelleinrichtung 28 bewegbaren Element 30 und die andere Feder 35 an einem feststehenden Bauteil ab. Die Bewegung der äußeren Hülse 25 wird von einem an dem beweglichen Element 30 angeordneten Anschlag 36 und einem feststehenden Anschlag 37 begrenzt. Hierdurch lässt sich der Verlauf des Speichervermögens des Energiespeichers 16 über den Druck in der in Figur 1 dargestellten hydraulischen Anlage 2 mit besonders vielen Freiheitsgraden einstellen.

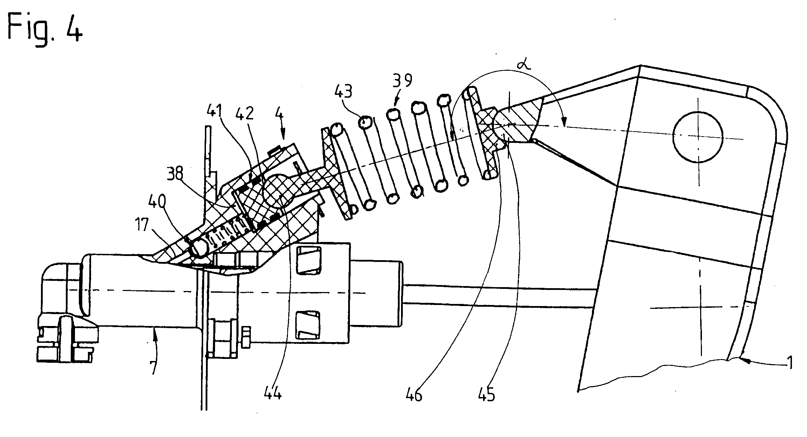

Figur 4 zeigt eine weitere Ausführungsform der Ausrückvorrichtung 4, bei der eine hydraulische Nachstelleinrichtung 38 als bauliche Einheit mit dem von dem Pedal 1 betätigbaren Geberzylinder 7 gefertigt ist. Hierbei ist das Pedal 1 im niedergedrückten Zustand, in dem der Winkel á größer als 180° ist, dargestellt. Dabei ist ersichtlich, dass die Bewegung des Pedals 1 durch die Kraft eines Energiespeichers 39 unterstützt wird. Ansonsten entspricht die Funktion dieser Ausführungsform der Ausrückvorrichtung 4 der in Figur 1 dargestellte Ausführungsform. In einer Leitung 9 zwischen dem Geberzylinder 7 und der hydraulischen Nachstelleinrichtung 38 ist ein Rückschlagventil 40 angeordnet. Die hydraulische Nachstelleinrichtung 38 hat ein als Kolben ausgebildetes bewegliches Element 41 mit einer Kugelpfanne 42. Eine sich an dem beweglichen Element 41 und dem Pedal 1 abstützende Feder 43 des Energiespeichers 39 hat einen entsprechend der Kugelpfanne 42 geformten Kugelkopf 44. Auf ihrem dem Kugelkopf 44 gegenüberliegenden Ende hat die Feder 43 eine einem Kugelkopf 45 des Pedals 1 entsprechend gestaltete Kugelpfanne 46. Selbstverständlich kann das bewegliche Element 41 auch als aus beispielsweise tiefgezogenem Blech gefertigter Zylinder ausgebildet sein.

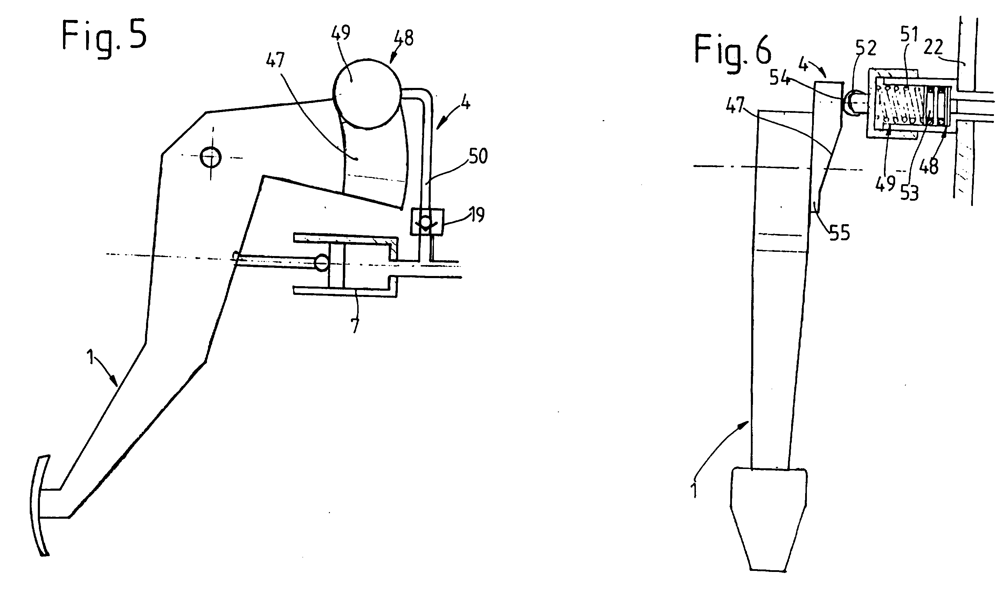

Figur 5 zeigt eine weitere Ausführungsform der Ausrückvorrichtung 4 in einer Seitenansicht auf das Pedal 1, dass das Pedal 1 eine Rampe 47 hat. Vor der Rampe 47 sind eine hydraulische Nachstelleinrichtung 48 und ein Energiespeicher 49 angeordnet. Die hydraulische Nachstelleinrichtung 48 ist über eine Leitung 50 mit dem von dem Pedal 1 betätigbaren Geberzylinder 7 verbunden. Figur 6 zeigt in einer Ansicht von vorne auf das Pedal 1 und die Ausrückvorrichtung 4 aus Figur 5 den Energiespeicher 49 und die hydraulische Nachstelleinrichtung 48 in einer Schnittdarstellung. Der Energiespeicher 49 hat eine Feder 51 zur Vorspannung eines Rollelementes 52 gegen die Rampe 47 des Pedals 1. Die Feder 51 wird von einem von der hydraulischen Nachstelleinrichtung 48 beweglichen Element 53 vorgespannt. Die Rampe 47 hat senkrecht zu der Bewegungsrichtung des Rollelementes 52 angeordnete Absätze 54, 55. In den Endbereichen der Schwenkbewegung des Pedals 1 gelangt das Rollelement 52 auf die Absätze 54, 55 und vermag damit keine Kräfte auf das Pedal 1 zu übertragen.

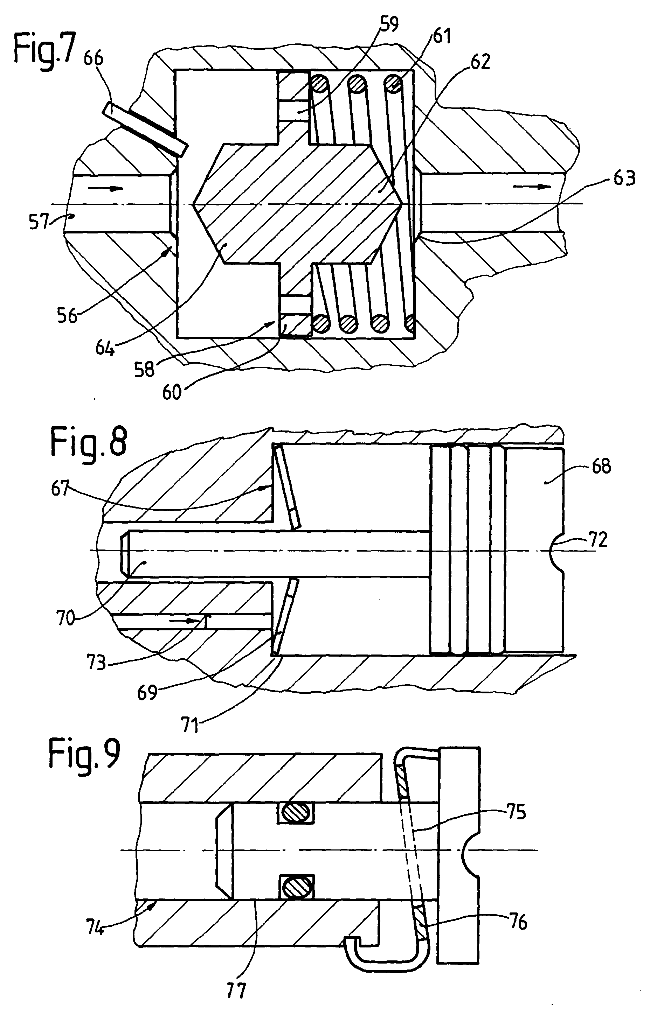

Figur 7 zeigt ein in einer Leitung 57 zwischen der hydraulischen Anlage 2 und der hydraulischen Nachstelleinrichtung 28, 38, 48 der Ausrückvorrichtungen 4 aus den Figuren 1 bis 6 angeordnetes Rückschlagventil 56 mit einer Drossel 58. Diese hat einen mit Ausnehmungen 59 versehenen, von einer Feder 61 gegen die Strömungsrichtung vorgespannten Kolben 60. Der Kolben 60 ist einteilig mit einem Schließglied 62 gefertigt. Die Ausnehmungen 59 ermöglichen eine schwache Strömung des Hydraulikfluids durch den Kolben 60. Bei einer starken Strömung oder bei einer hohen Viskosität des Hydraulikfluids wird der Kolben 60 von der Strömung erfasst und das Schließglied 62 gegen, einen Ventilsitz 63 gedrückt und damit die Strömung in der Leitung 57 unterbrochen. In Grundstellung spannt die Feder 61 den Kolben 60 nach links vor, bis ein Schließglied 64 des Rückschlagventils 56 gegen einen Ventilsitz 65 gelangt. Hierdurch wird ein Zurückfließen des Hydraulikfluids aus der hydraulischen Nachstelleinrichtung 28, 38,48 in die hydraulische Anlage 2 vermieden. Das Schließglied 64 des Rückschlagventils 56 lässt sich in Grundstellung mittels eines manuell zu betätigenden Löseorgans 66 von seinem Ventilsitz 65 abheben. Dies ermöglicht ein Abfließen des Hydraulikfluids aus der hydraulischen Nachstelleinrichtung beispielsweise beim Störfall oder nach einem Auswechseln der in Figur 1 dargestellten Reibbeläge 14 der Kupplung 3.

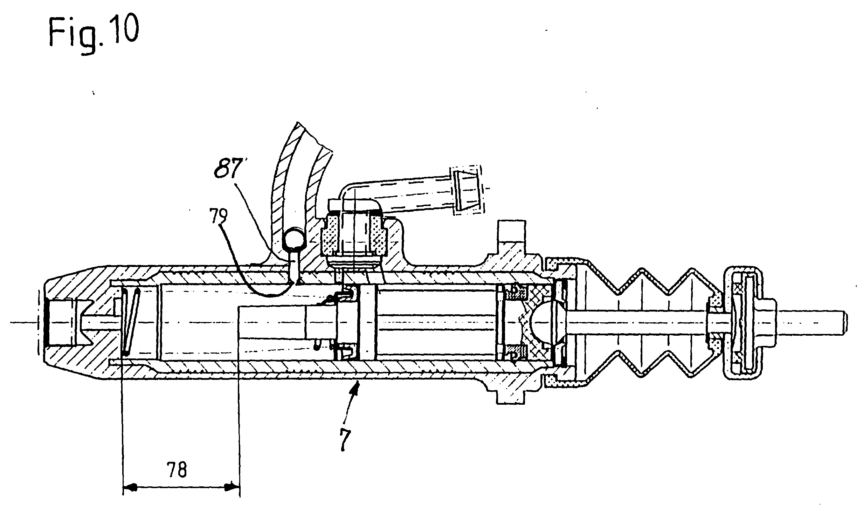

Figur 8 zeigt eine Schnittdarstellung durch eine hydraulische Nachstelleinrichtung 67, bei der ein bewegliches Element 68 von einem Halteelement 69 in seiner Lage gehalten ist. Das Halteelement 69 umgreift einen Schaft 70 des beweglichen Elements 68 und stützt sich radial außen an einer das bewegliche Element 68 führenden Zylinderwand 71 ab. In der eingezeichneten Lage ermöglicht das Halteelement 69 eine Bewegung des beweglichen Elements 68 nach rechts. Bei einem Druck des beweglichen Elements 68 nach links verkrallt sich das Halteelement 69 in dem Schaft 70 und blockiert dessen Bewegung. Auf seinem dem Schaft 70 abgewandten Ende hat das bewegliche Element 68 eine Kugelpfanne 72 zur Aufnahme eines nicht dargestellten Kugelgelenks eines Energiespeichers. Weiterhin zeigt Figur 8 ein manuell zu betätigendes Löseorgan 73 zur Lösung der Verbindung des beweglichen Elements 68 mit dem Halteelement 69. Hierdurch lässt sich nach einem Auswechseln der in Figur 1 dargestellten Reibbeläge 14 der Kupplung 3 das bewegliche Element 68 wieder in die Grundstellung nach links zurückbewegen.

Figur 9 zeigt eine hydraulische Nachstelleinrichtung 74, bei der ein bewegliches Element 75 von einem Halteelement 76 in seiner vorgesehenen Lage gehalten ist. Das Halteelement 76 ist bügelförmig gestaltet und umgreift das bewegliche Element 75. Von der eingezeichneten Lage aus lässt sich das bewegliche Element 75 nach rechts bewegen. Bei einem Druck auf das bewegliche Element 75 in die entgegengesetzte Richtung verkrallt sich das Halteelement 76 in dem beweglichen Element 75 und verkantet dieses zudem in einer Führung 77.

Gemäß Fig. 10 wird gezeigt, wie eine Leitung 87 in die Zylinderlaufbahn des Geberzylinders 7 mündet, wobei es auf einen Wegbereich 78 ankommt, wann eine Bohrung 79 durch den Kolben überfahren wird und dadurch eine vom Geberzylinderweg abhängige Druckversorgung der Nachstelleinrichtung bewirkt wird.

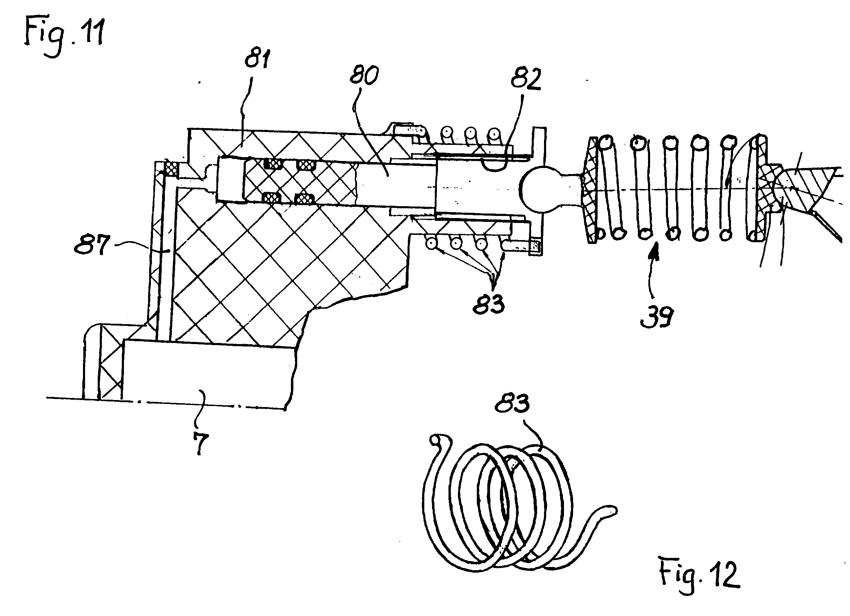

Gemäß Fig. 11 wird dargestellt, wie ein Nachstellkolben 80 in einem Gehäuse 81 über eine Leitung 87 mit dem Geberzylinder 7 direkt verbunden ist, wobei der Nachstellkolben 80 mit dem Gehäuse 81 über ein Gewinde 82 drehbar verbunden ist. Eine Drehfeder 83 spannt den Nachstellkolben 80 gegenüber dem Gehäuse 81 in einer Drehrichtung vor, wobei ein erstes Ende der Drehfeder 83 mit dem Gehäuse und ein zweites Ende der Drehfeder 83 mit einem Kragen des Nachstellkolbens 80 verbunden ist. Die Vorspannung will den Nachstellkolben aus dem Gehäuse heraus schrauben, wird aber durch die hohe Gewindereibung, hervorgerufen durch die Drücke des Energiespeichers 39, daran gehindert. eine Entlastung des Gewindes 82 wird im Falle des Kupplungsverschleißes eintreten, da die Drücke im Fluidsystem größer werden und der Drehfeder 83 die Möglichkeit geben, den Nachstellkolben 80 um einen kleinen Betrag gegen den Energiespeicher 39 herauszudrehen.

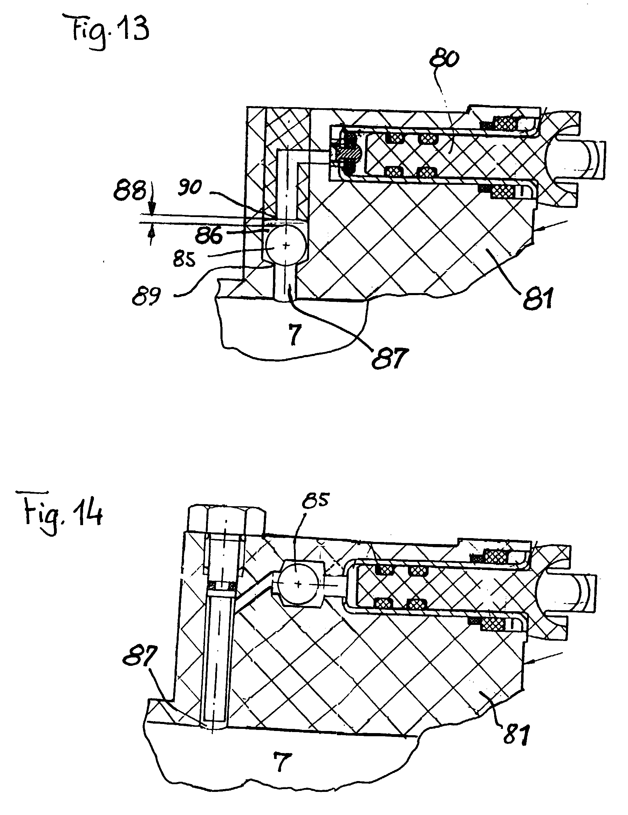

Fig. 13 zeigt eine Lösung bei ungewollten Druckspitzen im Fluidsystem, wodurch zuviel Volumen in den Nachstellzylinder strömt, was wiederum Wegverluste beim Wiedereinkuppeln und somit zur Folge hätte, dass das Pedal hängenbleiben kann. Zur Begrenzung des Fluidvolumens wird ein in zwei Richtungen wirkenden Rückschlagventil 84 vorgeschlagen, welches eine Kugel 85 aufweist, die in einem zylindrischen Raum 86 einen gewissen Bewegungsweg 88 durchlaufen kann, der sich dadurch ergibt, dass sich die Kugel von ihrem ersten Sitz 89 zu einem gegenüberliegenden zweiten Sitz 90 bewegen kann. Die Kugel 85 befindet sich in einem erweiterten zylindrischen Raum 86, der einen Querschnitt vom Durchmesser der Kugel aufweist und auf diese Weise das Fluidvolumen auf den sich aus dem Durchmesser der Kugel 85 und dem Bewegungsweg 88 ergebenden Volumenbetrag begrenzt.

Gemäß Fig. 14 wird ein Gehäuse 81 gezeigt, das eine Leitung 87 mit einem Ringquerschnitt aufweist, der zum Geberzylinder 7 hinweist und durch eine Schraube gebildet wird, die eine zylindrische Verlängerung aufweist, deren Durchmesser geringfügig kleiner als der Durchmesser der Leitung 87 ist.

### Bezugszeichenliste

- 1.: Pedal
- 2.: hydr. Anlage
- 3.: Kupplung
- 4.: Ausrückvorrichtung
- 5.: Lager
- 6.: Gelenkstange
- 7.: Geberzylinder
- 8.: Pedalplatte
- 9.: Leitung
- 10.: Nehmerzylinder
- 11.: Druckplatte
- 12.: Druckplatte
- 13.: Kupplungsscheibe
- 14.: Reibbelag
- 15.: Membranfeder
- 16.: Energiespeicher
- 17.: elastische Leitung
- 18.: Drossel
- 19.: Rückschlagventil
- 20.: Kugelpfanne
- 21.: Kugelpfanne
- 22.: festst. Bauteil
- 23.: Kugelkopf
- 24.: Kugelkopf
- 25.: erste Hülse
- 26.: zweite Hülse
- 27.: Feder
- 28.: hydr.Nachstelleinrichtung
- 29.: Kolben
- 30.: bewegl. Element
- 31.: Anschlussstutzen
- 32.: Anschlussstecker
- 33.: Anschlag
- 34.: Feder 35. Feder
- 36.: Anschlag
- 37.: festst. Anschlag
- 38.: hydr. Nachstelleinrichtung
- 39.: Energiespeicher
- 40.: Rückschlagventil
- 41.: bewegl. Element
- 42.: Kugelpfanne
- 43.: Feder
- 44.: Kugelkopf
- 45.: Kugelkopf
- 46.: Kugelpfanne
- 47.: Rampe
- 48.: hydr.Nachstelleinrichtung
- 49.: Energiespeicher
- 50.: elastische Leitung
- 51.: Feder
- 52.: Rollelement
- 53.: bewegliches Element
- 54.: Absatz
- 55.: Absatz
- 56.: Rückschlagventil
- 57.: Leitung
- 58.: Drossel
- 59.: Ausnehmung
- 60.: Kolben
- 61.: Feder
- 62.: erstes Schließglied
- 63.: Löseorgan
- 64.: zweites Schließglied
- 65.: Ventilsitz
- 66.: Löseorgan
- 67.: hydr. Nachstelleinrichtung
- 68.: bewegliches Element
- 69.: Halteelement
- 70.: Schaft
- 71.: Zylinderwand
- 72.: Kugelpfanne
- 72.: Kugelpanne
- 73.: Löseorgan
- 74.: hydr. Nachstelleinrichtung
- 75.: bewegliches Element
- 76.: Löseorgan
- 77.: Führung
- 78.: Wegbereich
- 79.: Bohrung
- 80.: Nachstellkolben
- 81.: Gehäuse
- 82.: Gewinde
- 83.: Drehfeder
- 84.: Rückschlagventil
- 85.: Kugel
- 86.: zylindrischer Raum
- 87.: Leitung
- 88.: Bewegungsweg
- 89.: erster Sitz
- 90.: zweiter Sitz

## Patentansprüche

1. Ausrückvorrichtung, insbesondere für eine Kupplung eines Kraftfahrzeuges, mit einem von einem Pedal betätigbaren Geberzylinder einer hydraulischen Anlage mit, einem beim Einrücken Energie aufnehmenden und beim Ausrücken die Energie wieder freisetzenden Energie-speicher, wobei der Energiespeicher an dem Pedal oder einer mit dem Pedal verbundenen Hebeleinrichtung angelenkt ist,
**dadurch gekennzeichnet,**
dass der Energiespeicher (16, 39 49) Mittel zur Erhöhung seiner Energieaufnahme bei steigendem Druck innerhalb der hydraulischen Anlage (2) aufweist.

2. Ausrückvorrichtung nach Anspruch 1,
**dadurch gekennzeichnet,**
dass die Mittel zur Erhöhung der Energieaufnahme des Energiespeichers (16, 39, 49) eine hydraulische Nachstelleinrichtung (28, 38, 48, 67, 74) aufweisen und dass die hydraulische Anlage (2) zur Druckbeaufschlagung der hydraulischen Nachstelleinrichtung (28, 38, 48, 67, 74) gestaltet ist.

3. Ausrückvorrichtung nach Anspruch 1 oder 2,
**dadurch gekennzeichnet,**
dass eine Feder (27,34,35,43,51) des Energiespeichers von der hydraulischen Nachstelleinrichtung (28,38,48,67,74) vorspannbar gestaltet ist.

4. Ausrückvorrichtung nach zumindest einem der vorhergehenden Ansprüche,
**dadurch gekennzeichnet,**
dass die hydraulische Nachstelleinrichtung (28,38,48,67, 74) ein von dem Druck in der hydraulischen Anlage (2) bewegliches Element (30,41,53,68,75) und Mittel zur Halterung des beweglichen Elements (30,41,53,68,75) in der von dem Nachstelldruck der hydraulischen Anlage (2) eingestellten Lage hat.

5. Ausrückvorrichtung nach zumindest einem der vorhergehenden Ansprüche,
**dadurch gekennzeichnet,**
dass die hydraulische Nachstelleinrichtung (28,38,48,67, 74) ein manuell betätigbares Löseorgan (66,73,76) zur Zurückbewegung des beweglichen Elements (30,41,53,68,75) in eine Grundstellung hat.

6. Ausrückvorrichtung nach zumindest einem der vorhergehenden Ansprüche,
**dadurch gekennzeichnet,**
dass die Mittel zur Halterung des beweglichen Elements (30,41,53) ein zwischen der hydraulischen Anlage (2) und der hydraulischen Nachstelleinrichtung (28,38,48) angeordnetes Ventil, insbesondere ein Rückschlagventil 19,40,56), aufweisen.

7. Ausrückvorrichtung nach zumindest einem der vorhergehenden Ansprüche,
**dadurch gekennzeichnet,**
dass die Mittel zur Halterung des beweglichen Elements (68,75) ein kraft- oder formschlüssig mit dem beweglichen Element (68,75) verbindbares Halteelement (69,76) aufweisen.

8. Ausrückvorrichtung nach zumindest einem der vorhergehenden Ansprüche,
**dadurch gekennzeichnet,**
dass das Pedal (1) eine Rampe (47) hat und dass ein Gleit- oder Rollelement (52) vom Energiespeichers (49) gegen die Rampe (47) vorgespannt wird.

9. Ausrückvorrichtung nach zumindest einem der vorhergehenden Ansprüche,
**dadurch gekennzeichnet,**
dass die Rampe (47) in Ruhestellung des Pedals (1) einen vorzugsweise senkrecht zur Bewegungsrichtung des Gleit- oder Rollelementes (52) angeordneten Absatz (54, 55) aufweist.

10. Ausrückvorrichtung nach zumindest einem der vorhergehenden Ansprüche,
**dadurch gekennzeichnet,**
dass der Energiespeicher (16,49) zwei teleskopartig ineinander schiebbare und mittels der Feder (27,34,35,51) voneinander weg vorgespannte Hülsen (25,26) hat, und dass eine der Hülsen (25) an dem Pedal (1) angelenkt ist.

11. Ausrückvorrichtung nach zumindest einem der vorhergehenden Ansprüche,
**dadurch gekennzeichnet,**
dass die zweite Hülse (26) an einem feststehenden Bauteil (Bock 22) angelenkt ist.

12. Ausrückvorrichtung nach zumindest einem der vorhergehenden Ansprüche,
**dadurch gekennzeichnet,**
dass der Energiespeicher (16,39) jeweils Gelenke, insbesondere Kugelköpfe (23,24,44) oder Kugelpfannen (46), zum Abstützen an angrenzenden Bauteilen hat.

13. Ausrückvorrichtung nach zumindest einem der vorhergehenden Ansprüche,
**dadurch gekennzeichnet,**
dass zwischen der hydraulischen Nachstelleinrichtung (28, 38,48,67,74) und der hydraulischen Anlage (2) eine elastische Leitung (17,50) angeordnet ist.

14. Ausrückvorrichtung nach zumindest einem der vorhergehenden Ansprüche,
**dadurch gekennzeichnet,**
dass ein Anschlussstutzen (31) der hydraulischen Nachstelleinrichtung (28) senkrecht zu der Schwenkrichtung des Energiespeichers (16) und in der Schwenkachse der Kugelpfanne (21) angeordnet ist und dass ein Anschlussstecker (32) der die hydraulische Nachstelleinrichtung (28) mit der hydraulischen Anlage (2) verbindende Leitung (17) gegenüber dem Anschlussstutzen (31) verdrehbar ist.

15. Ausrückvorrichtung nach zumindest einem der vorhergehenden Ansprüche,
**dadurch gekennzeichnet,**
dass die Feder (43) gegenüber der hydraulischen Nachstelleinrichtung (38,67,74) schwenkbar gehalten ist.

16. Ausrückvorrichtung nach zumindest einem der vorhergehenden Ansprüche,
**dadurch gekennzeichnet,**
dass die hydraulische Nachstelleinrichtung (28,38,48,67, 74) eine Drossel (18, 58) hat.

17. Ausrückvorrichtung nach zumindest einem der vorhergehenden Ansprüche,
**dadurch gekennzeichnet,**
dass die Drossel (18,58) als Teil eines Ventils zum Verschließen einer Leitung (57) zwischen der hydraulischen Anlage (2) und der hydraulischen Nachstelleinrichtung (28, 38,48,67,74) bei Druckschwankungen und/oder bei niedriger Temperatur in der zu der hydraulischen Anlage (2) führenden Leitung (17,50,57) gestaltet sein kann.

18. Ausrückvorrichtung nach zumindest einem der vorhergehenden Ansprüche,
**dadurch gekennzeichnet,**
dass das Ventil (58) einen von der Strömung bewegbaren Kolben (60) hat und dass der Kolben (60) zur Bewegung eines die Leitung versperrenden Schließgliedes (62) gestaltet ist.

19. Ausrückvorrichtung nach zumindest einem der vorhergehenden Ansprüche,
**dadurch gekennzeichnet,**
dass der Kolben (60) in Grundstellung des Pedals (1) in einer Lage gehalten ist, in welcher ein zweites Schließglied (64) in eine die Leitung (57) versperrende Stellung vorspannt ist.

20. Ausrückvorrichtung nach zumindest einem der vorhergehenden Ansprüche,
**dadurch gekennzeichnet,**
dass der Kolben (60) mittels Kraft, z. B. der Schwerkraft oder der Kraft einer Feder (61) in die Grundstellung vorgespannt ist.

21. Ausrückvorrichtung nach zumindest einem der vorhergehenden Ansprüche,
**dadurch gekennzeichnet,**
dass die Drossel (18,58) senkrecht angeordnet und von unten nach oben durchströmbar gestaltet ist.

22. Ausrückvorrichtung nach Anspruch 4,
**dadurch gekennzeichnet,**
dass die Nachstellung nicht unbedingt bei dem maximalen Systemdruck erfolgt, sondern bei einem Nachstelldruck, der um eine Hysterese über dem aus Federkraft durch Zylinderrichtung gebildeten Verstelldruckniveau liegt.

23. Ausrückvorrichtung nach Anspruch 4 oder 22,
**dadurch gekennzeichnet,**
dass der Wegbereich (78) des Pedals (1) während dessen der Energiespeicher (16,39,49) nachgestellt werden kann, eingegrenzt werden kann, indem die Druckversorgung des Nachstelldrucks, z. B. geberzylinderwegabhängig durch Überfahren einer Bohrung (79) durch ein Verschiebeelement im Geberzylinder abgekoppelt werden kann.

24. Ausrückvorrichtung nach Anspruch 15,
**dadurch gekennzeichnet,**
dass durch die Wirkrichtung der Nachstelleinrichtung (28, 38,48) im Verhältnis zur Drehachse des Pedals ein nachstellwegabhängiger Einfluss auf den Totpunkt so genommen werden kann, dass der Totpunkt sich nicht verändert, wenn die Mittelachse des Nachstellzylinders sich mit der Drehachse des Pedals schneidet (Fig. 10), der Totpunkt sich in Richtung kürzerer Pedalweg vorverlagert, wenn die Mittelachse des Nachstellzylinders unterhalb der Drehachse des Pedals durchläuft (Fig. 11) oder der Totpunkt sich in Richtung längerer Pedalweg nach hinten verlagert, wenn die Mittelachse des Nachstellzylinders oberhalb der Drehachse des Pedals durchläuft (Fig. 12).

25. Ausrückvorrichtung, insbesondere für eine Kupplung eines Kraftfahrzeuges, mit einem von einem Pedal betätigbaren Geberzylinder einer hydraulischen Anlage mit einem beim Einrücken Energie aufnehmenden und beim Ausrücken die Energie wieder freisetzenden Energiespeicher, wobei der Energiespeicher an dem Pedal oder einer mit dem Pedal verbundenen Hebeleinrichtung angelenkt ist,
**dadurch gekennzeichnet,**
dass ein Nachstellkolben (80) in einem Gehäuse (81) über ein Gewinde (82) drehbar angeordnet ist, wobei eine zwischen dem Nachstellkolben (80) und dem Gehäuse (81) angeordnete Drehfeder (83) dem Nachstellkolben (80) eine Drehvorspannung gegenüber dem Gehäuse (81) verleiht.

26. Ausrückvorrichtung nach Anspruch 25,
**dadurch gekennzeichnet,**
dass das Gewinde (82) in Bezug auf axial auf den Nachstellkolben (80) wirkende Kräfte selbsthemmend ist.

27. Ausrückvorrichtung nach Anspruch 25 oder 26,
**dadurch gekennzeichnet,**
dass die Vorspannung der Drehfeder (83) den Nachstellkolben (80) in Richtung zum Energiespeicher (39) verdreht, sofern das Gewinde (82) ausreichend entlastet ist.

28. Ausrückvorrichtung nach einem der Ansprüche 1 bis 24,
**dadurch gekennzeichnet,**
dass zur Steuerung und Begrenzung des bei einem Lastspiel zu verschiebenden Fluidvolumens durch den Nachstellkolben (80) ein nach beiden Richtungen wirkendes Rückschlagventil (84) mit einer Kugel (85) angeordnet ist, die sich in einem zylindrischen Raum (86) mit einem Querschnitt bewegt, der größer als der einer Leitung (87) ist, wobei die Kugel(85) mit ihrem Bewegungsweg (88) von einem ersten Sitz(89) zu einem zweiten Sitz(90) verschoben wird.

29. Ausrückvorrichtung nach Anspruch 28,
**dadurch gekennzeichnet,**
dass der Bewegungsweg (88) einstellbar ist.

30. Ausrückvorrichtung nach einem der vorhergehenden Ansprüche,
**dadurch gekennzeichnet,**
dass die Leitung (87) an ihrer Mündung zum Geberzylinder (7) einen ringförmigen Querschnitt aufweist.
